Europäisches Patentamt

European Patent Office

Office européen des brevets

(11) Veröffentlichungsnummer: **0 043 044**
**B1**

(19)

(12) # EUROPÄISCHE PATENTSCHRIFT

(45) Veröffentlichungstag der Patentschrift:
02.10.85

(51) Int. Cl.⁴: **G 09 F 3/02**, G 09 F 3/14,
D 06 H 1/04 // B29C65/08

(21) Anmeldenummer: **81104714.1**

(22) Anmeldetag: **19.06.81**

(54) **Etikett und Maschine zum Konfektionieren von Etiketten.**

(30) Priorität: 27.06.80 DE 3024138
26.09.80 DE 8025802 U

(43) Veröffentlichungstag der Anmeldung:
**06.01.82 Patentblatt 82/1**

(45) Bekanntmachung des Hinweises auf die Patenterteilung:
**02.10.85 Patentblatt 85/40**

(84) Benannte Vertragsstaaten:
**AT BE CH DE FR GB IT LI NL**

(56) Entgegenhaltungen:
**EP - A - 0 032 703**
**DE - A - 2 650 266**
**DE - A - 2 731 348**
**FR - A - 1 474 712**
**US - A - 1 927 766**

(73) Patentinhaber: **Otto Brand GmbH, Bleicherstrasse 5-7,
D-5600 Wuppertal 2 (DE)**

(72) Erfinder: **Kempf, Thomas, Bleicherstrasse 5-7,
D-5600 Wuppertal 2 (DE)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

BUNDESDRUCKEREI BERLIN

**Beschreibung**

Die Erfindung betrifft ein Etikett aus textilem, ultraschallschweißbarem Bandmaterial sowie eine Maschine zum Konfektionieren von derartigen Etiketten mit einer taktweise arbeitenden Förderstrecke, einer Abtrenneinrichtung zum Ablängen der Etiketten und einer Falt- und Bügeleinrichtung zum Ergreifen, Falten und Bügeln der hintereinander angeförderten Etiketten.

Bei bekannten Maschinen zum Konfektionieren von Etiketten wird das Etikettenmaterial gewöhnlich in Bandform von einer Bobine abgezogen und einer taktweise arbeitenden Förderstrecke zugeführt, auf der ein Messer zum Abtrennen der Etiketten von dem Band, gesteuert durch eine fotoelektrische Abtasteinrichtung, angeordnet ist. Die abgetrennten und auf der Förderstrecke hintereinander angeförderten Etiketten werden einer Falt- sowie einer Bügeleinrichtung zugeführt, wo sie ergriffen, mit einer oder mehreren auf die Rückseite des Etiketts umgebeugten Falten versehen und anschließend gebügelt werden. Die gebügelten Etiketten werden dann einer Ablegeeinrichtung zugeführt, wo sie in Verpackungsbehältern abgelegt werden. Derartige Maschinen werden beispielsweise von der Firma Horst Kind GmbH., Textilmaschinenfabrik, 5600 Wuppertal-Barmen, Bundesrepublik Deutschland, oder von der Firma Forthmann Label Services Ltd., West Woods, New Jersey/ USA, hergestellt und vertrieben.

Bei den mit derartigen Maschinen hergestellten Etiketten mit auf die Rückseite des Etiketts umgebugten Falten nimmt jedoch die Handhabung der Etiketten beim Einnähen etwa in Kleidungsstücken viel Zeit in Anspruch, da die auf die Rückseite umgebugten Falten dazu neigen, sich von den Etiketten abzuspreizen, und ggf. auch schon bei der Ablage in der Ablegeeinrichtung umgeknickt worden sind und somit das Einnähen zusätzlich erschweren.

Außerdem sind aus der FR-A-1 474 712 Etiketten mit einer umgebugten Falte bekannt, wobei die Falte mittels einer durch Heißsiegeln bewirkten Schweißverbindung mit der Etikettenvorderseite verbunden ist. Hierbei handelt es sich um eine dauerhafte Schweißverbindung, so daß ein derartiges Etikett, nachdem es in ein Kleidungsstück eingenäht worden ist, nur noch auf aufwendige Weise wieder entfernt werden kann. Am Ende einer Modesaison bleiben jedoch im allgemeinen Teilkollektionen eines Kleidungsstückherstellers unverkauft, die billiger und nicht über den Fachhandel abgegeben werden sollen, so daß es häufig notwendig ist, die Etiketten, die auf den Hersteller hinweisen, aus den Kleidungsstücken zu entfernen und durch andere zu ersetzen. Dies ist jedoch bei den Etiketten, die mit den Maschinen der bekannten Art hergestellt werden, mit großem Arbeits- und Zeitaufwand verbunden, da entweder die Etikett-Stoffnähte aufgetrennt oder die Etiketten mit Hilfe einer Schneideeinrichtung herausgeschnitten werden müssen.

Außerdem ist es aus der DE-A-2 731 348 bekannt, zum Vorheften von Zuschnitten aus textilem Material Ultraschallschweißen zu verwenden, um die Verwendung von Steckern und Nadeln zu vermeiden und eine präzise, nicht mehr lösbare Vorheftung zu schaffen.

Abgesehen davon sind aus der DE-A-2 650 266 Etiketten zum Identifizieren von Textilstücken, die beispielsweise gereinigt werden sollen, bekannt, die an einer Seite mit einer thermoplastischen Klebeschicht versehen sind, wobei ein Teil des Umfangs umgebogen und mit der Klebeseite verklebt ist. Diese Etiketten sind nicht zum Verbleib an den Textilstücken bestimmt und daher nicht dauerhaft befestigt.

Aufgabe der Erfindung ist es, das Konfektionieren von Etiketten zu ermöglichen, die ohne weiteres ergriffen, auf den Stoff, auf den sie aufgenäht werden sollen, aufgelegt und aufgenäht werden können, ohne daß zeitraubende Handhabungen notwendig sind, und die in einfacher Weise wieder von dem Stoff abgetrennt werden können.

Diese Aufgabe wird dadurch gelöst, daß bei dem Etikett die Schweißnaht eine sich linienförmig über die gesamte Breite des Etiketts erstreckende Ultraschall-Trennabriß-Schweißnaht ist, bzw. daß bei der Maschine zum Konfektionieren nach der Falteinrichtung und nach oder im Bereich der Bügeleinrichtung eine Ultraschallschweißeinrichtung zum Befestigen von umgebugten Falten der Etiketten vorgesehen ist, wobei die Ultraschallschweißeinrichtung derart eingestellt ist, daß sie als Schweißnaht eine Trennabriß-Schweißnaht erzeugt, die sich über die gesamte Breite des Etiketts erstreckt.

Eine derartige Schweißnaht dient einerseits der Befestigung von umgebugten Falten, falls solche vorgesehen sind, andererseits ermöglicht sie aber auch das Herausreißen des Etiketts aus dem Kleidungsstück, so daß lediglich der eingenähte Randstreifen an dem Kleidungsstück verbleibt, der dann von dem neu anzubringenden Etikett verdeckt werden kann.

Als ultraschall-schweißbares Material eignen sich beispielsweise Acetat oder Polymermaterialien aller Art, wobei es sich um bedruckte oder gewebte Etiketten handeln kann.

Die Ultraschall-Schweißeinrichtung kann einen Schweißkopf aufweisen, der ggf. höhen- und seitenverstellbar angeordnet ist, während die Schweißzeit mittels eines Ultraschall-Generators entsprechend dem Etikettenmaterial (Zusammensetzung und Stärke) eingestellt werden kann. Vorzugsweise wird ein entsprechend dem Maschinentakt in bezug auf den Schweißkopf der Ultraschall-Schweißeinrichtung hin- und herbeweglicher Amboß verwendet. Die Ultraschall-Schweißeinrichtung kann unmittelbar vor der Ablegeeinrichtung, jedoch bevorzugterweise auch nach der Falteinrichtung im Bereich der Bügeleinrichtung angeordnet sein, zumal die Bügeleinrichtung, die gewöhnlich aus mehreren Bügelstationen besteht, bewegliche Bügelplatten aufweist, die dann zur Ausbildung des Amboß für den Schweißkopf der Ultraschall-Schweißeinrichtung verlängert werden können.

Bei Etiketten mit umgebugten Falten besteht ferner der Vorteil, daß sich die auf die Rückseite umgebugten Falten bei der weiteren Handhabung nicht wegbiegen können oder bei der Bearbeitung schon abgeknickt werden.

Auch kann die Trennabriß-Schweißnaht so weit von dem anzuheftenden Rand des Etiketts angebracht werden, daß ein genügend großer Abschnitt des Etiketts nach dem Abreißen in dem Kleidungsstück verbleibt, an dem das neue Etikett seinerseits befestigt werden kann.

Die Erfindung wird nachstehend anhand der schematischen Figuren näher erläutert.

Fig. 1 zeigt schematisch eine Maschine zum Konfektionieren von Etiketten.

Fig. 2 zeigt eine Ausführungsform einer Ultraschall-Schweißstation für die Maschine von Fig. 1.

Fig. 3 und 4 zeigen verschiedene Ausführungsformen von Etiketten.

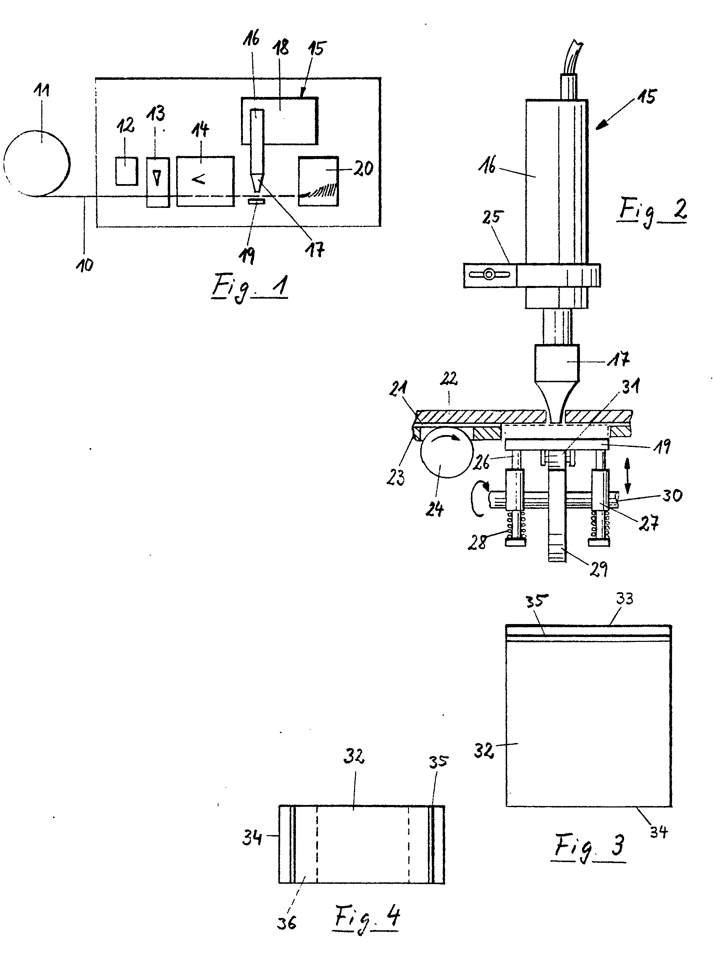

Bei der in Fig. 1 dargestellten Maschine zum Konfektionieren von Etiketten wird Etikettenbandmaterial 10 von einer Rolle 11 abgewickelt und einer taktweise arbeitenden Förderstrecke zugeführt, wobei das Abwickeln im Maschinentakt erfolgt und mittels Mikroschaltern (nicht dargestellt) über eine eingestellte Bandvorlauflänge gesteuert wird. Das Etikettenbandmaterial 10, das längs der Förderstrecke gefördert wird, läuft zunächst unter einer fotoelektrischen Abtasteinrichtung 12 hindurch, die auf einen bestimmten Punkt der vorbeilaufenden Etiketten des Etikettenbandmaterials 10 eingestellt ist und eine nachfolgende Abtrenneinrichtung 13 mit einem (beispielsweise beheizten) Messer steuert, so daß die Etiketten entsprechend dem Rapport an der gewünschten Stelle von dem Etikettenbandmaterial 10 in der Abtrenneinrichtung 13 abgeschnitten werden. Die abgetrennten Etiketten werden einer nachfolgenden Falt- und Bügeleinrichtung 14 zugeführt, wo das noch ungefaltete Etikett von einer Greifvorrichtung übernommen und in der gewünschten Weise gefaltet und gebügelt wird, um exakte Faltkanten zu erhalten.

Entsprechend dem Maschinentakt werden die gefalteten Etiketten durch eine Ultraschall-Schweißeinrichtung 15 hindurchgeführt, die aus einem Schallkopf 16 mit einer Sonotrode 17 und einem Ultraschall-Generator 18 sowie einem bezüglich der Sonotrode 17 hin- und herbeweglichen Amboß 19 besteht. In der Ultraschall-Schweißeinrichtung 15 erfolgt das Verschweißen der auf die Rückseite der Etiketten umgebugten Falten mit dem Etikett. Das Anbringen der Ultraschall-Schweißnähte erfolgt nach dem Falten im Bereich der Bügeleinrichtung.

Nach dem Anbringen der Ultraschall-Schweißnähte werden die fertigen Etiketten einer Ablegeeinrichtung 20 zugeführt, wo sie gestapelt und abgelegt werden.

Da derartige Maschinen zum Konfektionieren von Etiketten abgesehen von der erfindungsgemäß vorgesehenen Ultraschall-Schweißeinrichtung 15 an sich bekannt sind, erübrigt sich eine nähere Darstellung.

Gemäß Fig. 2 werden die abgetrennten und umgebugten Etiketten über einen Führungskanal 21, der zwischen zwei Führungsplatten 22, 23 angeordnet ist, in den Bereich der Ultraschall-Schweißeinrichtung 15 gefördert. Dies erfolgt beispielsweise mit Hilfe von Förderwalzen 24, die durch Ausnehmungen in der unteren Führungsplatte 23 in den Bereich des Förderkanals 21 hineinragen. Die Sonotrode 17 ragt durch einen Spalt in der Führungsplatte 22 in den Bereich der Förderstrecke für die Etiketten. Der Schallkopf 16 der Ultraschall-Schweißeinrichtung 15 ist am (nicht dargestellten) Maschinenrahmen feststehend beispielsweise mit einer Schelle 25 befestigt. Die untere Führungsplatte 23 besitzt eine Ausnehmung, innerhalb der der Amboß 19 in bezug auf die Sonotrode 17 auf- und abwärts beweglich angeordnet ist.

Bei dem dargestellten Ausführungsbeispiel ist der Amboß 19 mit zwei vertikalen Führungsstangen 26 versehen, die in Laufbüchsen 27, die am Maschinenrahmen befestigt sind, angeordnet sind, wobei sich zwischen dem freien Ende der Führungsstangen 26 und den feststehenden Laufbüchsen 27 eine Druckfeder 28 befindet. Auf diese Weise wird der Amboß 19 in Richtung von der Sonotrode 17 weg federvorgespannt. Der Amboß 19 wird mit Hilfe einer Nockenscheibe 29, die auf einer Welle 30 befestigt ist, auf- und abwärts bewegt, wobei an der Unterseite des Amboß 19 eine mit der Nockenscheibe 29 zusammenwirkende Rolle 31 angeordnet ist. Auf diese Weise wird ein angefördertes Etikett entsprechend dem Maschinentakt bei Erreichen der vorgesehenen Stellung mittels des Amboß 19 gegen die Sonotrode 17 gedrückt, wodurch die gewünschte Schweißnaht angebracht wird.

Die Ultraschall-Schweißeinrichtung 15 kann intermittierend oder auch kontinuierlich arbeiten, da das Anbringen der Schweißnaht nur dann erfolgt, wenn das Etikett zwischen dem Amboß 19 und der Sonotrode 17 eingepreßt ist.

Der Amboß 19 kann, wie dargestellt, großflächiger ausgebildet sein, er kann jedoch auch ebenfalls die Form der gewünschten Schweißnaht aufweisen. In letzterem Falle ist es möglich, die Sonotrode 17 großflächiger auszubilden, sie kann jedoch auch genau komplementär zu dem Amboß 19 ausgebildet sein.

Bei dem in Fig. 3 dargestellten Etikett 32 handelt es sich um ein solches, das längs seiner Oberkante 33 etwa in ein Kleidungsstück eingenäht werden soll. Auf seiner dargestellten Vorderseite befinden sich z. B. Hinweise auf den Hersteller, während die rückseitige, um die Faltkante 34 umgebugte (nicht sichtbare) Falte, die sich bis zur Oberkante 33 erstreckt, beispielsweise Angaben über die Zusammensetzung und die Behandlung des Kleidungsstückes tragen kann, in das das Etikett 32 eingenäht werden soll. Die beiden über die Faltkante 34 miteinander verbundenen aufeinanderliegenden Abschnitte des Etiketts 32 sind im Bereich der Oberkante 33 mittels einer Trennabriß-Ultraschall-Schweißnaht 35 miteinander verbunden, die sich linienförmig über die gesamte Breite des Etiketts 32 erstreckt und eine strichförmige Vertiefung an der Oberseite des Etiketts 32 bildet, jedoch können auch zwei Schweißnähte 35 vorgesehen sein, um die umgebugten Falten 36 eines Etiketts 32, wie in Fig. 4 dargestellt, miteinander zu verbinden, wo das Etikett 32 zwei auf die Rückseite umgebugte Falten 36 aufweist.

Bei den Etiketten 32 mit Trennabriß-Schweißnähten 35 sind letztere so weit von dem benachbarten Rand entfernt anzuordnen, daß die eigentliche, beim Einnähen der Etiketten anzubringende Naht zwischen der Schweißnaht 35 und dem benachbarten Rand des Etiketts 32 angebracht werden kann, so daß das Etikett ggf. ohne weiteres herausgerissen werden kann, wobei die mit Garn festgenähten Ränder zwischen der Schweißnaht 35 und dem benachbarten Rand des Etiketts in dem Kleidungsstück verbleiben.

## Patentansprüche

1. Etikett aus textilem, ultraschallschweißbarem Bandmaterial, das gegebenenfalls wenigstens eine auf die Rückseite umgebugte Falte (36) sowie eine Schweißnaht benachbart zum jeweiligen Anheftrand (33, 34) des Etiketts (32) aufweist, dadurch gekennzeichnet, daß die Schweißnaht eine sich linienförmig über die gesamte Breite des Etiketts (32) erstreckende Ultraschall-Trennabriß-Schweißnaht (35) ist.

2. Maschine zum Konfektionieren von Etiketten (32) aus textilem, ultraschallschweißbarem Bandmaterial (10) mit einer taktweise arbeitenden Förderstrecke, einer Abtrenneinrichtung (13) zum Ablängen der Etiketten (32) und einer Falt- und Bügeleinrichtung (14) zum Ergreifen, Falten und Bügeln der hintereinander angeförderten Etiketten (32), dadurch gekennzeichnet, daß nach der Falt- und Bügeleinrichtung (14) bzw. nach der Falteinrichtung im Bereich der Bügeleinrichtung eine Ultraschallschweißeinrichtung (15) zum Befestigen von umgebugten Falten (36) der Etiketten (32) an den Etiketten (32) vorgesehen ist, wobei die Ultraschallschweißeinrichtung (15) derart eingestellt ist, daß sie als Schweißnaht (35) eine Trennabriß-Schweißnaht erzeugt, die sich über die gesamte Breite des Etiketts (32) erstreckt.

## Claims

1. Label consisting of textile strip material adapted to be welded by ultrasonic waves and which if necessary has at least one fold (36) bent over onto the reverse side as well as a weld seam adjacent to the particular attachment edge (33, 34) of the said label (32), characterised in that the weld seam is an ultrasonic tear-off weld seam (35) extending linearly over the entire width of the label (32).

2. A machine for manufacturing labels (32) from textile ultrasonically weldable strip material (10) with a rhythmically operating conveyor path, a parting device (13) for cutting the labels (32) to length and a folding and pressing means (14) for gripping, folding and pressing the serially supplied labels (32), characterised in that downstream of the folding and pressing means (14) or downstream of the folding means in the region of the pressing means there is an ultrasonic welding device (15) for attaching bent-over folds (36) of labels (32) to the labels (32), the ultrasonic welding device (15) being so adjusted that it generates as a welding seam (35) a tearoff weld seam which extends over the entire width of the label (32).

## Revendications

1. Etiquette en matiére textile se présentant sous forme de ruban pouvant être soudé par ultrasons, qui, le cas échéant, présente au moins un repli (36) sur le face postérieure ainsi qu'un cordon de soudure limitrophe de la bordure devant être fixée (33, 34), caractérisée par le fait que le cordon de soudure constitue une soudure par ultrasons (35) cédant à l'arrachement et s'étendant linéairement sur toute la largeur de l'étiquette (32).

2. Machine pour la confection d'étiquettes (32) en matière textile se présentant sous forme de ruban pouvant être soudé par ultrasons (10), équipée d'un convoyeur travaillant en cadence, d'un poste de coupe (13) pour sectionner les étiquettes à la longueur voulue et d'un poste de pliage et de repassage (14) pour saisir, plier et repasser les étiquettes (32) au fur et à mesure de leur arrivée, caractérisée par le fait qu'après le poste de pliage et de repassage (14) ou après le poste de pliage dans la zone du poste de repassage, il est prévu un poste de soudure par ultrasons (15) pour fixer les replis (36) des étiquettes (32) sur ces mêmes étiquettes (32), ce poste de soudure par ultrasons (15) étant réglé de telle sorte qu'il réalise comme soudure (35) un cordon de soudure cédant à l'arrachement et s'étendant sur toute la largeur de l'étiquette (32).

Fig. 1

Fig. 2

Fig. 3

Fig. 4